(19) Europäisches Patentamt
European Patent Office
Office européen des brevets

(11) **EP 4 775 938 A1**

(12) **EUROPEAN PATENT APPLICATION**
published in accordance with Art. 153(4) EPC

(43) Date of publication:
**15.07.2026 Bulletin 2026/29**

(21) Application number: **24862922.2**

(22) Date of filing: **06.09.2024**

(51) International Patent Classification (IPC):
***G01J 1/42*** (2006.01)   ***G01J 1/02*** (2006.01)

(52) Cooperative Patent Classification (CPC):
**G01J 1/02; G01J 1/42**

(86) International application number:
**PCT/JP2024/032107**

(87) International publication number:
**WO 2025/053273 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 JP 2023146389**

(71) Applicant: **Zeon Corporation**
**Tokyo 100-8246 (JP)**

(72) Inventors:
• **OKADA Noriaki**
**Tokyo 100-8246 (JP)**
• **YAMAGUCHI Takeshi**
**Tokyo 100-8246 (JP)**

(74) Representative: **Maiwald GmbH**
**Elisenhof**
**Elisenstraße 3**
**80335 München (DE)**

(54) **ULTRAVIOLET MEASUREMENT SYSTEM, ULTRAVIOLET MEASUREMENT METHOD, AND PROGRAM**

(57)    An ultraviolet measurement system includes a power generating device and an information processing device. The power generating device includes an energy harvesting section that outputs a generated current according to visible region energy of received sunlight and a first control section that transmits information of the generated current to the information processing device. The information processing device includes a second control section that estimates ultraviolet region energy of the sunlight based on the information of the generated current.

*FIG. 1*

## Description

TECHNICAL FIELD

The present disclosure relates to an ultraviolet measurement system, an ultraviolet measurement method, and a program that measure ultraviolet radiation of sunlight.

BACKGROUND

Sunlight includes ultraviolet radiation. Ultraviolet radiation is categorized as UV-A, UV-B, or UV-C depending on its wavelength. Among ultraviolet radiation, UV-A and UV-B are ultraviolet radiation that reaches the surface of the earth, whereas UV-C is ultraviolet radiation that is absorbed by the ozone layer and almost none of which reaches the surface of the earth. UV-A has a wavelength of 315 nm to 400 nm. UV-B has a wavelength of 280 nm to 315 nm. UV-C has a wavelength of 100 nm to 280 nm.

The human body produces vitamin D upon exposure to ultraviolet radiation of a wavelength corresponding to UV-B or in proximity thereto. Since vitamin D is useful for the human body, exposure to an appropriate amount of ultraviolet radiation so as to produce vitamin D is desirable.

Excessive exposure to ultraviolet radiation causes erythema of the skin. Erythema refers to a phenomenon in which the skin becomes red and sunburnt and in which inflammation is induced. Therefore, it is desirable to avoid excessive exposure to ultraviolet radiation.

Since it is desirable to be exposed to a suitable amount of ultraviolet radiation while avoiding excessive exposure as described above, it would be useful to know the energy of ultraviolet radiation with which one is currently being irradiated.

For example, Patent Literature (PTL) 1 discloses a measurement device configured to measure exposure of a user to ultraviolet radiation.

CITATION LIST

Patent Literature

PTL 1: JP7216732B2

SUMMARY

(Technical Problem)

The measurement device described in PTL 1 includes an ultraviolet sensitive LED (Light-Emitting Diode) that is capable of directly detecting ultraviolet radiation.

However, sensors that directly detect ultraviolet radiation are expensive, resulting in high cost.

Accordingly, an object of the present disclosure is to solve the problem set forth above and provide an ultraviolet measurement system, an ultraviolet measurement method, and a program that can measure ultraviolet region energy of sunlight without using a sensor that directly detects ultraviolet radiation.

(Solution to Problem)

The present disclosure is directed at advantageously solving the problem set forth above, and, according to the present disclosure, an ultraviolet measurement system, ultraviolet measurement method, or program according to each of the following [1] to [10] is provided.

[1] An ultraviolet measurement system that measures ultraviolet radiation of sunlight, comprising a power generating device and an information processing device, wherein
the power generating device includes:

an energy harvesting section that outputs a generated current according to visible region energy of received sunlight; and
a first control section that transmits information of the generated current to the information processing device, and
the information processing device includes a second control section that estimates ultraviolet region energy of the sunlight based on the information of the generated current.

By adopting a configuration such as set forth above, it is possible to measure ultraviolet region energy of sunlight without using a sensor that directly detects ultraviolet radiation.

[2] The ultraviolet measurement system according to the foregoing [1], wherein

the information processing device further includes a storage section that stores a first formula for calculating the ultraviolet region energy of the sunlight from the generated current, and
the second control section uses the first formula to estimate the ultraviolet region energy of the sunlight based on the information of the generated current.

By adopting a configuration such as set forth above, it is possible to estimate ultraviolet region energy of sunlight using the first formula.

[3] The ultraviolet measurement system according to the foregoing [1] or [2], wherein the second control section, when using the first formula to estimate the ultraviolet region energy of the sunlight, corrects the generated current based on at least one of: date and time; location; temperature; orientation of the energy harvesting section; and characteristic variation of the energy harvesting section, and estimates the ultraviolet region energy of the sunlight based on the generated current that has been corrected.

By adopting a configuration such as set forth above, it is possible to estimate ultraviolet region energy by taking into account the influence of date and time, location, temperature, orientation of the energy harvesting section, characteristic variation of the energy harvesting section, and so forth.

[4] The ultraviolet measurement system according to any one of the foregoing [1] to [3], wherein the second control section estimates a time until a specific amount of vitamin D is produced by a user bearing the ultraviolet measurement system based on the ultraviolet region energy of the sunlight that has been estimated.

By adopting a configuration such as set forth above, it is possible to estimate the time until a specific amount of vitamin D is produced by a user.

[5] The ultraviolet measurement system according to any one of the foregoing [1] to [4], wherein

the information processing device further includes a storage section that stores a second formula for calculating the time until the specific amount of vitamin D is produced from the ultraviolet region energy of the sunlight, and
the second control section uses the second formula to estimate the time until the specific amount of vitamin D is produced based on the ultraviolet region energy of the sunlight.

By adopting a configuration such as set forth above, it is possible to estimate the time until a specific amount of vitamin D is produced by a user using the second formula.

[6] The ultraviolet measurement system according to any one of the foregoing [1] to [5], wherein the second control section, when estimating the time until the specific amount of vitamin D is produced, corrects the time until the specific amount of vitamin D is produced based on at least one of skin type and skin exposure area of the user.

By adopting a configuration such as set forth above, it is possible to estimate the time until a specific amount of vitamin D is produced by a user by taking into account the influence of skin type of the user, skin exposure area of the user, and so forth.

[7] The ultraviolet measurement system according to any one of the foregoing [1] to [6], wherein the second control section estimates a time until erythema arises in a user bearing the ultraviolet measurement system based on the ultraviolet region energy of the sunlight that has been estimated.

By adopting a configuration such as set forth above, it is possible to estimate the time until erythema arises in a user bearing the ultraviolet measurement system.

[8] The ultraviolet measurement system according to any one of the foregoing [1] to [7], wherein

the information processing device further includes a storage section that stores a third formula for calculating the time until erythema arises from the ultraviolet region energy of the sunlight, and
the second control section uses the third formula to estimate the time until erythema arises based on the ultraviolet region energy of the sunlight.

By adopting a configuration such as set forth above, it is possible to estimate the time until erythema arises in a user bearing the ultraviolet measurement system using the third formula.

[9] The ultraviolet measurement system according to any one of the foregoing [1] to [8], wherein

the power generating device further includes a gyro sensor that detects an orientation of the energy harvesting section,
the information processing device further includes a position sensor that detects a position of the information processing device,
the first control section transmits, to the information processing device, information of the orientation of the energy harvesting section detected by the gyro sensor, and
the second control section corrects the generated current based on the orientation of the energy harvesting section and the position of the information processing device and estimates the ultraviolet region energy of the sunlight based on the generated current that has been corrected.

By adopting a configuration such as set forth above, it is possible to estimate ultraviolet region energy by taking into account the orientation of the energy harvesting section and the position of the information processing device.

[10] The ultraviolet measurement system according to any one of the foregoing [1] to [9], wherein the second control section automatically corrects the generated current based on the orientation of the energy harvesting section and the position of the information processing device.

By adopting a configuration such as set forth above, it is possible to automatically correct the generated current by taking into account the orientation of the energy harvesting section and the position of the information processing device.

[11] The ultraviolet measurement system according to any one of the foregoing [1] to [10], wherein the second control section estimates a time until a specific amount of vitamin D is produced by a user bearing the ultraviolet measurement system based on the ultraviolet region energy of the sunlight that has been estimated based on the generated current that has been corrected.

By adopting a configuration such as set forth above, it is possible to estimate the time until a specific amount of vitamin D is produced by taking into account the orientation of the energy harvesting section and the position of the information processing device.

[12] The ultraviolet measurement system according to any one of the foregoing [1] to [11], wherein

the information processing device further includes a display section, and

the second control section causes the display section to display the time until the specific amount of vitamin D is produced.

By adopting a configuration such as set forth above, it is possible for a user to determine the time until a specific amount of vitamin D is produced.

[13] The ultraviolet measurement system according to any one of the foregoing [1] to [12], wherein the second control section aggregates a time for which the energy harvesting section has received the sunlight and causes the display section to display the time for which the energy harvesting section has received the sunlight, together with the time until the specific amount of vitamin D is produced.

By adopting a configuration such as set forth above, it is possible for a user to appropriately manage the time for which they are exposed to sunlight.

[14] The ultraviolet measurement system according to any one of the foregoing [1] to [13], wherein, in a situation in which the orientation of the energy harvesting section is facing in an orientation that is in shadow relative to a direction of the sun, the second control section:

causes the display section to display a notification; or

corrects the time until the specific amount of vitamin D is produced based on a time for which the orientation of the energy harvesting section is facing in the orientation that is in shadow relative to the direction of the sun.

By adopting a configuration such as set forth above, it is possible for a user to change the orientation of the energy harvesting section in a situation in which the orientation of the energy harvesting section is facing in an orientation that is in shadow relative to the direction of the sun. Alternatively, it is possible to correct the time until a specific amount of vitamin D is produced based on the time for which the orientation of the energy harvesting section is facing in the orientation that is in shadow relative to the direction of the sun.

[15] The ultraviolet measurement system according to any one of the foregoing [1] to [14], wherein the second control section estimates a time until erythema arises in a user bearing the ultraviolet measurement system based on the ultraviolet region energy of the sunlight that has been estimated based on the generated current that has been corrected.

By adopting a configuration such as set forth above, it is possible to estimate the time until erythema arises by taking into account the orientation of the energy harvesting section and the position of the information processing device.

[16] The ultraviolet measurement system according to any one of the foregoing [1] to [15], wherein

the information processing device further includes a display section, and

the second control section causes the display section to display the time until erythema arises.

By adopting a configuration such as set forth above, it is possible for a user to determine the time until erythema arises.

[17] The ultraviolet measurement system according to any one of the foregoing [1] to [16], wherein the second control section aggregates a time for which the energy harvesting section has received the sunlight and causes the display section to display the time for which the energy harvesting section has received the sunlight, together with the time until erythema arises.

By adopting a configuration such as set forth above, it is possible for a user to appropriately manage the time for which they are exposed to sunlight.

[18] The ultraviolet measurement system according to any one of the foregoing [1] to [17], wherein, in a situation in which the orientation of the energy harvesting section is facing in an orientation that is in shadow relative to a direction of the sun, the second control section:

causes the display section to display a notification; or

corrects the time until erythema arises based on a time for which the orientation of the energy harvesting section is facing in the orientation that is in shadow relative to the direction of the sun.

By adopting a configuration such as set forth above, it is possible for a user to change the orientation of the energy harvesting section in a situation in which the orientation of the energy harvesting section is facing in an orientation that is in shadow relative to the direction of the sun. Alternatively, it is possible to correct the time until erythema arises based on the time for which the orientation of the energy harvesting section is facing in the orientation that is in shadow relative to the direction of the sun.

[19] An ultraviolet measurement method using an ultraviolet measurement system including a power generating device and an information processing device, comprising:

the power generating device outputting a generated current according to visible region energy of received sunlight;

the power generating device transmitting information of the generated current to the information processing device; and

the information processing device estimating ultraviolet region energy of the sunlight based on the information of the generated current.

By adopting a configuration such as set forth above, it is possible to measure ultraviolet region energy of sunlight without using a sensor that directly detects ultraviolet radiation.

[20] A program that causes a computer to execute operations including:

acquiring, from a power generating device that outputs a generated current according to visible region energy of received sunlight, information of the generated current; and

estimating ultraviolet region energy of the sunlight based on the information of the generated current.

By adopting a configuration such as set forth above, it is possible to measure ultraviolet region energy without using a sensor that directly detects ultraviolet radiation.

(Advantageous Effect)

According to the present disclosure, it is possible to provide an ultraviolet measurement system, an ultraviolet measurement method, and a program that can measure ultraviolet region energy of sunlight without using a sensor that directly detects ultraviolet radiation.

BRIEF DESCRIPTION OF THE DRAWINGS

In the accompanying drawings:

FIG. 1 is a block diagram illustrating schematic configuration of an ultraviolet measurement system according to one embodiment of the present disclosure;

FIG. 2 illustrates an example of a relationship between generated current and ultraviolet region energy;

FIG. 3 illustrates an example of a relationship between skin type and a correction factor;

FIG. 4 illustrates an example of a relationship between skin exposure area and a correction factor; and

FIG. 5 is a flowchart illustrating an example of operations of an ultraviolet measurement system according to one embodiment of the present disclosure.

DETAILED DESCRIPTION

The following describes embodiments of the present disclosure with reference to the drawings.

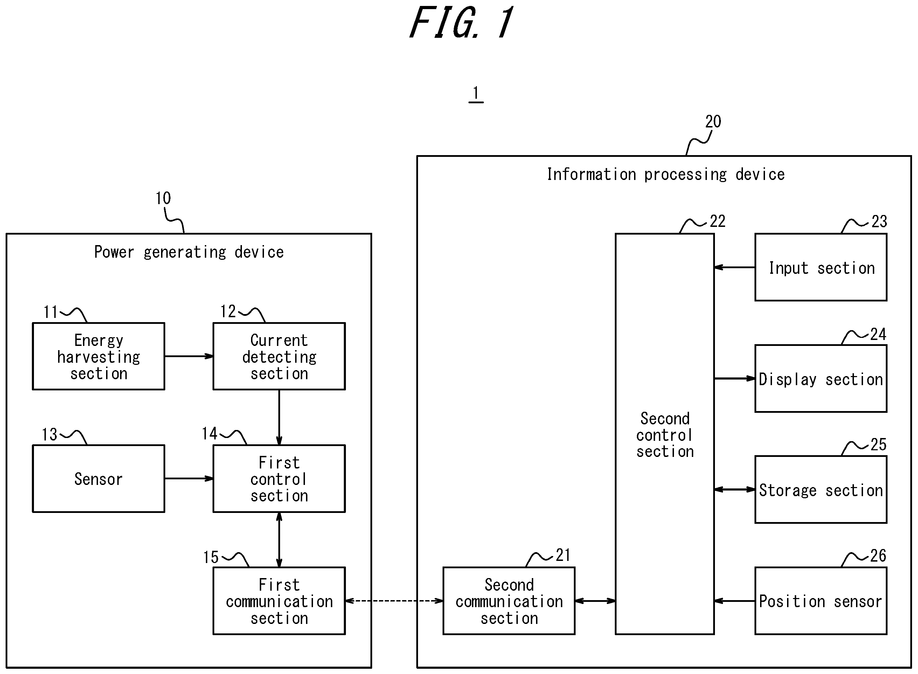

FIG. 1 is a block diagram illustrating schematic configuration of an ultraviolet measurement system 1 according to one embodiment of the present disclosure.

The ultraviolet measurement system 1 includes a power generating device 10 and an information processing device 20.

The power generating device 10 is a portable power generating device that can be carried around by a user. The power generating device 10 can receive sunlight and generate electrical power. The power generating device 10 may be a device that can be held in a hand by the user or may be a device that can be worn by the user.

The information processing device 20 is a portable information processing device that can be carried around by the user. The information processing device 20 may be a general-purpose information processing device such as a smartphone, a tablet, or a notebook PC. Alternatively, the information processing device 20 may be a dedicated information processing device that can function as the information processing device 20 of the ultraviolet measurement system 1.

First, the configuration of the power generating device 10 is described.

The power generating device 10 includes an energy harvesting section 11, a current detecting section 12, a sensor 13, a first control section 14, and a first communication section 15.

The energy harvesting section 11, upon receiving sunlight, outputs a generated current according to visible region energy of the received sunlight. The energy harvesting section 11 outputs the generated current to the current detecting section 12.

The energy harvesting section 11 may include a solar cell panel that includes a solar cell. The solar cell panel is a member including a solar cell that performs photoelectric conversion of incident light of sunlight and outputs electric power. The type of solar cell that is included in the solar cell panel may be broadly classified as an inorganic solar cell in which an inorganic material is used or an organic solar cell in which an organic material is used. The inorganic solar cell may be a Si solar cell in which silicon (Si) is used, a compound solar cell in which a compound is used, a quantum dot solar cell in which a quantum dot is used, or the like. The organic solar cell may be a thin-film solar cell such as a vacuum-deposited small molecule-type solar cell in which an organic pigment is used, a solution-processed polymer-type solar cell in which a conductive polymer is used, or a solution-processed conversion-type solar cell in which a convertible semiconductor is used, or may be a dye-sensitized solar cell formed from titania, an organic dye, and an electrolyte. Examples of solar cells that can be included in the solar cell panel also include organic/inorganic hybrid solar cells and solar cells in which a perovskite compound is used. Moreover, a tandem-type solar cell in which these are combined or stacked can also be used. The solar cell panel may have a thin panel shape. In such a case, an organic thin-film solar cell, dye-sensitized solar cell, or perovskite solar cell produced on a plastic film or the like is suitable in terms of ease of thin molding. Note that in a case in which the solar cell panel has a thin panel shape, the solar cell panel is not limited to being produced on a plastic film or the like as described above, and may of course be of any type so long as it is thin. In a case in which the solar cell panel has a thin panel shape, the thickness thereof may suitably be not less than 10 $\mu$m and not more than 3 mm from a viewpoint of production technology, for example.

The current detecting section 12 detects the generated current that is supplied from the energy harvesting section 11. In detection of the generated current, the current detecting section 12 may detect the short-circuit current or may detect the current flowing at an arbitrary point on an IV curve. During the above, it is desirable that the energy harvesting section 11 is oriented in the direction of the sun so as to maximize the current that is detected.

The current detecting section 12 outputs the generated current that it has detected to the first control section 14.

The sensor 13 is a sensor that detects an orientation of the energy harvesting section 11. The sensor 13 may be any type of sensor that can detect the orientation of the energy harvesting section 11. For example, the sensor 13 may include an acceleration sensor, a gyro sensor, or the like.

The sensor 13 outputs the orientation of the energy harvesting section 11 that it has detected to the first control section 14.

The first control section 14 includes at least one processor, at least one dedicated circuit, or a combination thereof. The processor may be a general-purpose processor such as a CPU (Central Processing Unit) or a GPU (Graphics Processing Unit) or may be a dedicated processor that is specialized for specific processing. The dedicated circuit may be an FPGA (Field-Programmable Gate Array) or an ASIC (Application Specific Integrated Circuit), for example. The first control section 14 controls each section of the power generating device 10 while executing processing relating to operations of the power generating device 10.

The first control section 14 outputs information of the generated current that it has acquired from the current detecting section 12 to the information processing device 20, via the first communication section 15.

The first communication section 15 can perform wireless communication or wired communication with a second communication section 21 of the information processing device 20. In a case in which the first communication section 15 performs wireless communication with the second communication section 21 of the information processing device 20, the first communication section 15 may, for example, include a communication module that is compatible with the Bluetooth® (Bluetooth is a registered trademark in Japan, other countries, or both) communication standard. Alternatively, the first communication section 15 may include a communication module that is compatible with a wireless communication standard other than Bluetooth.

Next, the configuration of the information processing device 20 is described.

The information processing device 20 includes a second communication section 21, a second control section 22, an input section 23, a display section 24, a storage section 25, and a position sensor 26.

The second communication section 21 can perform wireless communication or wired communication with the first communication section 15 of the power generating device 10. In a case in which the second communication section 21 performs wireless communication with the first communication section 15 of the power generating device 10, the second communication section 21 may, for example, include a communication module that is compatible with the Bluetooth communication standard. Alternatively, the second communication section 21 may include a communication module that is compatible with a wireless communication standard other than Bluetooth.

The second control section 22 includes at least one processor, at least one dedicated circuit, or a combination thereof. The processor may be a general-purpose processor such as a CPU or a GPU or may be a dedicated processor that is specialized for specific processing. The dedicated circuit may be an FPGA or an ASIC, for example. The second control section 22 controls each section of the information processing device 20 while executing processing relating to operations of the information processing device 20.

Details of functions of the second control section 22 are described further below.

The input section 23 includes at least one input interface that detects user input and acquires input information based on an operation of the user. For example, the input section 23 may include a physical key, a capacitive key, a touch screen that is integrated with a display of the display section 24, a microphone that receives audio input, or the like, but is not limited thereto.

The display section 24 can display various types of data. The display section 24 may include an LCD (Liquid Crystal Display), an organic EL (Electro Luminescent) display, or the like, for example.

The storage section 25 may be semiconductor memory, magnetic memory, optical memory, or the like, for example, but is not limited thereto. The storage section 25 may function as a main storage device, an auxiliary storage device, or cache memory, for example. The storage section 25 stores arbitrary information used for operations of the information processing device 20. For example, the storage section 25 may store a system program, an application program, and various information received through the second communication section 21.

The position sensor 26 detects a position of the information processing device 20. The position information may include latitude, longitude, altitude, and so forth, for example. The position sensor 26 may include one or more receivers that are compatible with any satellite positioning system. For example, the position sensor 26 may include a GPS (Global Positioning System) receiver.

The position sensor 26 outputs the position information of the information processing device 20 that it has detected to the second control section 22.

Next, operations of the ultraviolet measurement system 1 are described.

The user of the ultraviolet measurement system 1 bears the power generating device 10 and the information processing device 20. The energy harvesting section 11 of the power generating device 10 can receive sunlight.

Upon receiving sunlight, the energy harvesting section 11 outputs a generated current according to visible region energy of the received sunlight.

The current detecting section 12 detects the generated current that is supplied from the energy harvesting section 11. The current detecting section 12 outputs the generated current that it has detected to the first control section 14.

The first control section 14 transmits information of the generated current that it has acquired from the current detecting section 12 to the information processing device 20, via the first communication section 15. The information of the generated current may be information including the magnitude of the generated current.

The second communication section 21 of the information processing device 20 receives the information of the generated current that has been transmitted by the first communication section 15 of the power generating device 10. The second control section 22 acquires the information of the generated current via the second communication section 21.

The second control section 22 estimates ultraviolet region energy of the sunlight based on the information of the generated current that it has acquired. The estimated ultraviolet region energy of the sunlight may be the energy of ultraviolet radiation that reaches the surface of the earth. In other words, the estimated ultraviolet region energy of the sunlight may be energy of wavelengths corresponding to UV-A and UV-B. Note that as previously described, UV-A has a wavelength of 315 nm to 400 nm. Moreover, UV-B has a wavelength of 280 nm to 315 nm. In the following description, the "ultraviolet region energy of sunlight" may also be referred to simply as "ultraviolet region energy".

Processing by which the second control section 22 estimates the ultraviolet region energy based on the information of the generated current is described below in more detail.

The storage section 25 stores a formula for calculating the ultraviolet region energy from the generated current. In the following description, the "formula for calculating the ultraviolet region energy from the generated current" may also be referred to as a "first formula".

The first formula may be a formula that has been generated based on measurement data for a relationship between generated current and ultraviolet region energy that has been measured in advance.

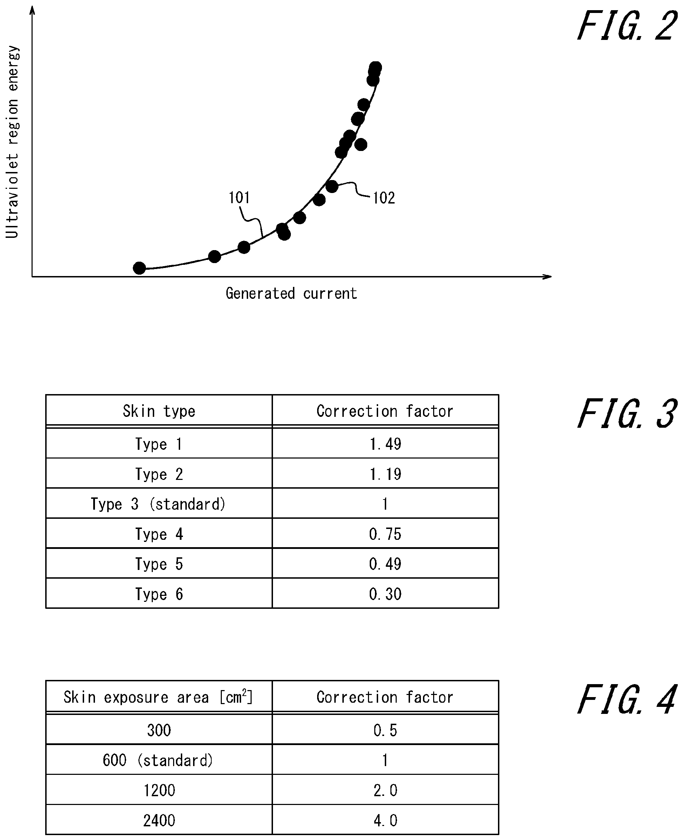

FIG. 2 illustrates an example of a relationship between generated current and ultraviolet region energy. The horizontal axis in FIG. 2 is generated current. The vertical axis in FIG. 2 is ultraviolet region energy.

In FIG. 2, a graph 101 is a function corresponding to the first formula. Data 102 are measurement data of generated current and ultraviolet region energy. As illustrated in FIG. 2, the first formula may be generated by performing fitting with respect to a plurality of measurement data for generated current and ultraviolet region energy. The storage section 25 stores the first formula that has been generated in this manner.

The first formula may, for example, be a formula such as the following formula (1).
[Math. 1]

$$E_{UV} = k1 \times e^{k2 \times (I/(A/n))} \quad (1)$$

Note that $E_{UV}$ is ultraviolet region energy per unit area. k1 and k2 are parameters. I is generated current. A is the total area of solar cell panels of the energy harvesting section 11. n is the number of solar cell panels in the energy harvesting section 11.

Note that the preceding formula (1) is presented as an example of the first formula and that the first formula is not limited to the format of the preceding formula (1).

The second control section 22 uses the first formula that is stored in the storage section 25 to estimate the ultraviolet region energy based on the information of the generated current that it has acquired from the power generating device 10. In estimation of the ultraviolet region energy, the second control section 22 may estimate the ultraviolet region energy as energy per unit area as indicated in the preceding formula (1).

The second control section 22 may cause the display section 24 to display the ultraviolet region energy that the second control section 22 has estimated. This makes it possible for the user to confirm the ultraviolet region energy at the present time.

Instead of causing the display section 24 to display a value of the ultraviolet region energy in that form, the second control section 22 may alternatively convert the value of the ultraviolet region energy to a UV index and may cause the display section 24 to display a value of the UV index.

The UV index may, for example, be an index such as the following.

11+: Extremely strong
8-10: Very strong
6-7: Strong
3-5: Moderate
1-2: Weak

<Vitamin D>

The human body produces vitamin D upon exposure to ultraviolet radiation. The second control section 22 of the information processing device 20 may estimate a time until a specific amount of vitamin D is produced based on the ultraviolet region energy that the second control section 22 has estimated. The specific amount of vitamin D may, for example, be 10 μg of vitamin D.

The storage section 25 stores a formula for calculating the time until the specific amount of vitamin D is produced from the ultraviolet region energy. In the following description, the "formula for calculating the time until the specific amount of vitamin D is produced from the ultraviolet region energy" may be referred to as a "second formula".

The second formula may, for example, be a formula that has been generated based on measurement data for a relationship between ultraviolet region energy and time until the specific amount of vitamin D is produced that has been measured in advance.

The second formula may, for example, be a formula such as the following formula (2).
[Math. 2]

$$T_1 = k3 \times E_{UV}^{-k4} \quad (2)$$

Note that $T_1$ is the time until the specific amount of vitamin D is produced. k3 and k4 are parameters.

Note that the preceding formula (2) is presented as an example of the second formula and that the second formula is not limited to the format of the preceding formula (2).

The second control section 22 uses the second formula stored in the storage section 25 to estimate the time until the specific amount of vitamin D is produced based on the ultraviolet region energy that the second control section 22 has estimated.

The second control section 22 causes the display section 24 to display the estimated time until the specific amount of vitamin D is produced. This makes it possible for the user to confirm the length of time that they need to be exposed to sunlight for until they produce the specific amount of vitamin D.

Moreover, the second control section 22 may aggregate a time for which the energy harvesting section 11 has received the sunlight and may cause the display section 24 to display the time for which the energy harvesting section 11 has received the sunlight, together with the time until the specific amount of vitamin D is produced. This makes it possible for the user to appropriately manage the time for which they are exposed to sunlight.

The second control section 22, when estimating the time until the specific amount of vitamin D is produced, may correct the time until the specific amount of vitamin D is produced based on at least one of skin type and skin exposure area of the user.

FIG. 3 illustrates an example of a relationship between user skin type and a correction factor. The skin type expresses the color of skin. A type having a smaller number such as Type 1 is fairer skin, whereas a type having a larger number such as Type 6 is darker skin.

In general, the time taken to produce vitamin D is shorter with fairer skin and longer with darker skin. By dividing the time until the specific amount of vitamin D is produced, which has been calculated through the second formula, by a correction factor according to skin type such as indicated in FIG. 3, the second control section 22 can correct the time until the specific amount of vitamin D is produced.

The skin type of the user can be acquired in advance by the input section 23 of the information processing device 20 receiving input from the user. The second control section 22 stores the skin type of the user, acquired via the input section 23, in the storage section 25.

FIG. 4 illustrates an example of a relationship between user skin exposure area and a correction factor. The time taken to produce vitamin D is longer with a smaller skin exposure area and is shorter with a larger skin exposure area. By dividing the time until the specific amount of vitamin D is produced, which has been calculated through the second formula, by a correction factor according to skin exposure area such as indicated in FIG. 4, the second control section 22 can correct the time until the specific amount of vitamin D is produced.

The skin exposure area of the user can be acquired in advance by the input section 23 of the information processing device 20 receiving input from the user. The second control section 22 stores the skin exposure area of the user, acquired via the input section 23, in the storage section 25.

<Erythema>

Erythema of skin arises upon excessive exposure of the human body to ultraviolet radiation. The second control section 22 of the information processing device 20 may estimate a time until erythema arises based on the ultraviolet region energy that the second control section 22 has estimated.

The storage section 25 stores a formula for calculating the time until erythema arises in the user from the ultraviolet region energy. In the following description, the "formula for calculating the time until erythema arises in the user from the ultraviolet region energy" may be referred to as a "third formula".

The third formula may, for example, be a formula that has been generated based on measurement data for a relationship between ultraviolet region energy and time until erythema arises in the user that has been measured in advance.

The third formula may, for example, be a formula such as the following formula (3).

[Math. 3]

$$T_2 = k5 \times k3 \times E_{UV}^{-k4} \quad (3)$$

Note that $T_2$ is the time until erythema arises in the user. k5 is a parameter.

Note that the preceding formula (3) is presented as an example of the third formula and that the third formula is not limited to the format of the preceding formula (3).

The second control section 22 uses the third formula stored in the storage section 25 to estimate the time until erythema arises in the user based on the ultraviolet region energy that the second control section 22 has estimated.

The second control section 22 causes the display section 24 to display the estimated time until erythema arises in the user. This makes it possible for the user to avoid a situation in which erythema arises due to excessive exposure to ultraviolet radiation because the user can confirm the time until erythema arises.

Moreover, the second control section 22 may aggregate a time for which the energy harvesting section 11 has received the sunlight and may cause the display section 24 to display the time for which the energy harvesting section 11 has received the sunlight, together with the time until erythema arises. This makes it possible for the user to appropriately manage the time for which they are exposed to sunlight.

<Correction of generated current>

The second control section 22 of the information processing device 20, when estimating the ultraviolet region energy using the first formula, may correct the generated current based on at least one of: date and time; location; temperature; orientation of the energy harvesting section 11; and characteristic variation of the energy harvesting section 11, and may estimate the ultraviolet region energy based on the generated current that the second control section 22 has corrected. During the above, the second control section 22 may automatically correct the generated current based on at least one of: date and time; location; temperature; orientation of the energy harvesting section 11; and characteristic variation of the energy harvesting section 11, without the user making an input operation to the input section 23 or the like.

In a case in which the second control section 22 corrects the generated current based on date and time, the second control section 22 corrects the value of the generated current that it has acquired from the power generating device 10 based on the date and time at that point and then estimates the ultraviolet region energy by substituting the corrected value of the generated current into the first formula.

This makes it possible for the second control section 22 to estimate the ultraviolet region energy by taking into account the influence of orbit of the earth and the influence of rotation of the earth.

In a case in which the second control section 22 corrects the generated current based on location, the second control section 22 acquires position information of the information processing device 20 from the position sensor 26. The position information may include latitude and longitude information.

The second control section 22 corrects the value of the generated current that it has acquired from the power generating device 10 based on the position information and then estimates the ultraviolet region energy by substituting the corrected value of the generated current into the first formula.

This makes it possible for the second control section 22 to estimate the ultraviolet region energy by taking into account the influence of latitude and longitude.

In a case in which the second control section 22 corrects the generated current based on temperature, the second control section 22 corrects the value of the generated current that it has acquired from the power generating device 10 based on the temperature of the power generating device 10 at that point and then estimates the ultraviolet region energy by substituting the corrected value of the generated current into the first formula. The second control section 22 may acquire information of the temperature of the power generating device 10 from a temperature sensor of the power generating device 10. In this case, the sensor 13 of the power generating device 10 may include a temperature sensor.

This makes it possible for the second control section 22 to estimate the ultraviolet region energy by taking into account the influence of temperature of the power generating device 10.

In a case in which the second control section 22 corrects the generated current based on the orientation of the energy harvesting section 11, the second control section 22 acquires, from the power generating device 10, information of the orientation of the energy harvesting section 11 that has been detected by the sensor 13.

The second control section 22 corrects the value of the generated current that it has acquired from the power generating device 10 based on the orientation of the energy harvesting section 11 and then estimates the ultraviolet region energy by substituting the corrected value of the generated current into the first formula.

This makes it possible for the second control section 22 to estimate the ultraviolet region energy by taking into account the influence of orientation of the energy harvesting section 11.

In a case in which the second control section 22 corrects the generated current based on characteristic variation of the energy harvesting section 11, the second control section 22 corrects the value of the generated current that it has acquired from the power generating device 10 based on characteristic variation of the energy harvesting section 11 and then estimates the ultraviolet region energy by substituting the corrected value of the generated current into the first formula. Information relating to characteristic variation of the energy harvesting section 11 may be stored in the storage section 25 in advance.

This makes it possible for the second control section 22 to estimate the ultraviolet region energy by taking into account the influence of characteristic variation of the energy harvesting section 11.

<Situation in which orientation of energy harvesting section is facing in orientation in shadow relative to direction of sun>

The second control section 22 of the information processing device 20 can acquire, from the power generating device 10, an orientation of the energy harvesting section 11 that has been detected by the sensor 13. In a situation in which the orientation of the energy harvesting section 11 is facing in an orientation that is in shadow relative to the direction of the sun, the second control section 22 may cause the display section 24 to display a notification indicating that the energy harvesting section 11 is facing in an orientation that is in shadow relative to the direction of the sun. This makes it possible for the user to orient the energy harvesting section 11 in the direction of the sun.

Moreover, in a situation in which the orientation of the energy harvesting section 11 is facing in an orientation that is in shadow relative to the direction of the sun, the second control section 22 may correct and calculate the time until the specific amount of vitamin D is produced based on a time for which the orientation of the energy harvesting section 11 is facing in the orientation that is in shadow relative to the direction of the sun. Furthermore, in a situation in which the orientation of the energy harvesting section 11 is facing in an orientation that is in shadow relative to the direction of the sun, the second control section 22 may correct and calculate the time until erythema arises based on a time for which the orientation of the energy harvesting section 11 is facing in the orientation that is in shadow relative to the direction of the sun.

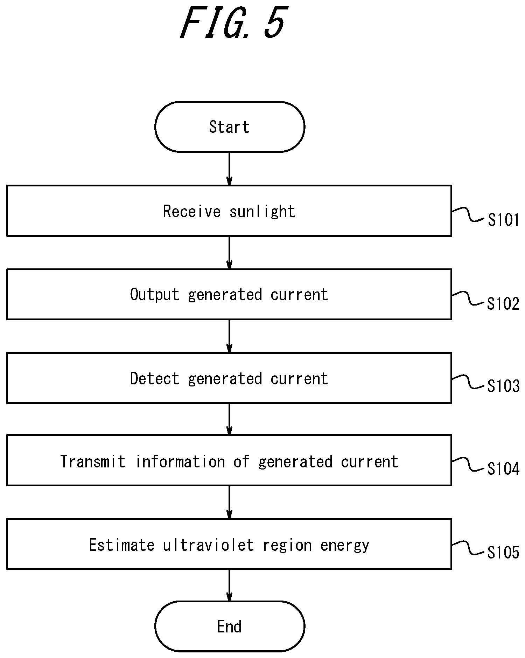

The following describes operations of the ultraviolet measurement system 1 with reference to a flowchart illustrated in FIG. 5.

Step S101: The energy harvesting section 11 of the power generating device 10 receives sunlight.

Step S102: The energy harvesting section 11 outputs a generated current according to visible region energy of the received sunlight to the current detecting section 12.

Step S103: The current detecting section 12 detects the generated current that is supplied from the energy harvesting section 11.

Step S104: The first control section 14 transmits information of the generated current that it has acquired from the current detecting section 12 to the information processing device 20, via the first communication section 15.

Step S105: The second control section 22 of the information processing device 20 estimates ultraviolet region energy of the sunlight based on the information of the generated current that the second control section 22 has acquired from the power generating device 10. The second control section 22 may further estimate a time until the user bearing the ultraviolet measurement system 1 produces a specific amount of vitamin D based on the ultraviolet region energy that the second control section 22 has estimated. Moreover, the second control section 22 may further estimate a time until erythema arises in the user bearing the ultraviolet measurement system 1 based on the ultraviolet region energy that the second control section 22 has estimated.

In this manner, the ultraviolet measurement system 1 according to the present embodiment includes a power generating device 10 and an information processing device 20. The power generating device 10 includes an energy harvesting section 11 that outputs a generated current according to visible region energy of received sunlight and a first control section 14 that transmits information of the generated current to the information processing device 20. The information processing device 20 includes a second control section 22 that estimates ultraviolet region energy of the sunlight based on the information of the generated current. In this manner, the ultraviolet measurement system 1 according to the present embodiment can estimate ultraviolet region energy of sunlight by detecting visible region energy of the sunlight. In other words, the ultraviolet measurement system 1 according to the present embodiment can measure ultraviolet region energy without using a sensor that directly detects ultraviolet radiation.

The foregoing description merely illustrates an embodiment of the present disclosure, and it goes without saying that various alterations may be made within the scope of the claims.

As one example, a configuration in which the information processing device 20 includes a position sensor 26 is illustrated in the present embodiment, but it may be the case that the power generating device 10 includes a position sensor 26.

As another example, a configuration in which the power generating device 10 includes an energy harvesting section 11, a current detecting section 12, a sensor 13, a first control section 14, and a first communication section 15 is illustrated in the present embodiment, but it is not essential that the power generating device 10 includes all of these elements. For example, it may be the case that the power generating device 10 does not include a sensor 13.

A general-purpose electronic such as a computer or a general-purpose device, for example, can be configured to function as the information processing device 20 according to the embodiment set forth above. Specifically, it is conceivable that a program in which processing content the realizes each function of the information processing device 20, etc. according to the embodiment is written may be stored in the memory of an electronic or a device and that a processor of the electronic or the device may be caused to read and execute this program. Therefore, the disclosure according to one embodiment can also be realized as a program that is executable by a processor. Moreover, the disclosure according to one embodiment can also be realized as an electronic or a device using such a program.

INDUSTRIAL APPLICABILITY

According to the present disclosure, it is possible to provide an ultraviolet measurement system, an ultraviolet measurement method, and a program that can measure ultraviolet region energy without using a sensor that directly detects ultraviolet radiation.

REFERENCE SIGNS LIST

1 ultraviolet measurement system
10 power generating device
11 energy harvesting section
12 current detecting section
13 sensor
14 first control section
15 first communication section
20 information processing device
21 second communication section
22 second control section
23 input section
24 display section
25 storage section
26 position sensor

**Claims**

1. An ultraviolet measurement system that measures ultraviolet radiation of sunlight, comprising a power generating device and an information processing device, wherein
the power generating device includes:

an energy harvesting section that outputs a generated current according to visible region energy of received sunlight; and
a first control section that transmits information of the generated current to the information processing device, and
the information processing device includes a second control section that estimates ultraviolet region energy of the sunlight based on the information of the generated current.

2. The ultraviolet measurement system according to claim 1, wherein

the information processing device further includes a storage section that stores a first formula for calculating the ultraviolet region energy of the sunlight from the generated current, and
the second control section uses the first formula to estimate the ultraviolet region energy of the sunlight based on the information of the generated current.

3. The ultraviolet measurement system according to claim 2, wherein the second control section, when using the first formula to estimate the ultraviolet region energy of the sunlight, corrects the generated current based on at least one of: date and time; location; temperature; orientation of the energy harvesting section; and characteristic variation of the energy harvesting section, and estimates the ultraviolet region energy of the sunlight based on the generated current that has been corrected.

4. The ultraviolet measurement system according to claim 1, wherein the second control section estimates a time until a specific amount of vitamin D is produced by a user bearing the ultraviolet measurement system based on the ultraviolet region energy of the sunlight that has been estimated.

5. The ultraviolet measurement system according to claim 4, wherein

the information processing device further includes a storage section that stores a second formula for calculating the time until the specific amount of vitamin D is produced from the ultraviolet region energy of the sunlight, and
the second control section uses the second formula to estimate the time until the specific amount of vitamin D is produced based on the ultraviolet region energy of the sunlight.

6. The ultraviolet measurement system according to claim 4, wherein the second control section, when estimating the time until the specific amount of vitamin D is produced, corrects the time until the specific amount of vitamin D is produced based on at least one of skin type and skin exposure area of the user.

7. The ultraviolet measurement system according to claim 1, wherein the second control section estimates a time until erythema arises in a user bearing the ultraviolet measurement system based on the ultraviolet region energy of the sunlight that has been estimated.

8. The ultraviolet measurement system according to claim 7, wherein

the information processing device further includes a storage section that stores a third formula for calculating the time until erythema arises from the ultraviolet region energy of the sunlight, and
the second control section uses the third formula to estimate the time until erythema arises based on the ultraviolet region energy of the sunlight.

9. The ultraviolet measurement system according to claim 1, wherein

the power generating device further includes a gyro sensor that detects an orientation of the energy harvesting section,
the information processing device further includes a position sensor that detects a position of the information processing device,
the first control section transmits, to the information processing device, information of the orientation of the energy harvesting section detected by the gyro sensor, and
the second control section corrects the generated current based on the orientation of the energy harvesting section and the position of the information processing device and estimates the ultraviolet region energy of the sunlight based on the generated current that has been corrected.

10. The ultraviolet measurement system according to claim 9, wherein the second control section automatically corrects the generated current based on the orientation of the energy harvesting section and the position of the information processing device.

11. The ultraviolet measurement system according to claim 9, wherein the second control section estimates a time until a specific amount of vitamin D is produced by a user bearing the ultraviolet measurement system based on the ultraviolet region energy of the sunlight that has been estimated based on the generated current that has been corrected.

12. The ultraviolet measurement system according to claim 11, wherein

the information processing device further includes a display section, and
the second control section causes the display section to display the time until the specific amount of vitamin D is produced.

13. The ultraviolet measurement system according to claim 12, wherein the second control section aggregates a time for which the energy harvesting section has received the sunlight and causes the display section to display the time for which the energy harvesting section has received the sunlight, together with the time until the specific amount of vitamin D is produced.

14. The ultraviolet measurement system according to claim 13, wherein, in a situation in which the orientation of the energy harvesting section is facing in an orientation that is in shadow relative to a direction of the sun, the second control section:

causes the display section to display a notification; or
corrects the time until the specific amount of vitamin D is produced based on a time for which the orientation of the energy harvesting section is facing in the orientation that is in shadow relative to the direction of the sun.

15. The ultraviolet measurement system according to claim 9, wherein the second control section estimates a time until erythema arises in a user bearing the ultraviolet measurement system based on the ultraviolet region energy of the sunlight that has been estimated based on the generated current that has been corrected.

16. The ultraviolet measurement system according to claim 15, wherein

the information processing device further includes a display section, and
the second control section causes the display section to display the time until erythema arises.

17. The ultraviolet measurement system according to claim 16, wherein the second control section aggregates a time for which the energy harvesting section has received the sunlight and causes the display section to display the time for which the energy harvesting section has received the sunlight, together with the time until erythema arises.

18. The ultraviolet measurement system according to claim 16, wherein, in a situation in which the orientation of the energy harvesting section is facing in an orientation that is in shadow relative to a direction of the sun, the second control section:

> causes the display section to display a notification; or
> corrects the time until erythema arises based on a time for which the orientation of the energy harvesting section is facing in the orientation that is in shadow relative to the direction of the sun.

19. An ultraviolet measurement method using an ultraviolet measurement system including a power generating device and an information processing device, comprising:

> the power generating device outputting a generated current according to visible region energy of received sunlight;
> the power generating device transmitting information of the generated current to the information processing device; and
> the information processing device estimating ultraviolet region energy of the sunlight based on the information of the generated current.

20. A program that causes a computer to execute operations including:

> acquiring, from a power generating device that outputs a generated current according to visible region energy of received sunlight, information of the generated current; and
> estimating ultraviolet region energy of the sunlight based on the information of the generated current.

# FIG. 1

EP 4 775 938 A1

*FIG. 2*

*FIG. 3*

| Skin type | Correction factor |
|---|---|
| Type 1 | 1.49 |
| Type 2 | 1.19 |
| Type 3 (standard) | 1 |
| Type 4 | 0.75 |
| Type 5 | 0.49 |
| Type 6 | 0.30 |

*FIG. 4*

| Skin exposure area [cm$^2$] | Correction factor |
|---|---|
| 300 | 0.5 |
| 600 (standard) | 1 |
| 1200 | 2.0 |
| 2400 | 4.0 |

# FIG. 5

```
        ┌──────────────┐
        │    Start     │
        └──────────────┘
                │
                ▼
┌───────────────────────────────────┐
│         Receive sunlight          │───── S101
└───────────────────────────────────┘
                │
                ▼
┌───────────────────────────────────┐
│      Output generated current     │───── S102
└───────────────────────────────────┘
                │
                ▼
┌───────────────────────────────────┐
│      Detect generated current     │───── S103
└───────────────────────────────────┘
                │
                ▼
┌───────────────────────────────────┐
│ Transmit information of generated current │───── S104
└───────────────────────────────────┘
                │
                ▼
┌───────────────────────────────────┐
│   Estimate ultraviolet region energy   │───── S105
└───────────────────────────────────┘
                │
                ▼
        ┌──────────────┐
        │     End      │
        └──────────────┘
```

## INTERNATIONAL SEARCH REPORT

| International application No. |
|---|
| **PCT/JP2024/032107** |

| A. | CLASSIFICATION OF SUBJECT MATTER |
|---|---|

*G01J 1/42*(2006.01)i; *G01J 1/02*(2006.01)i
FI:   G01J1/42 A; G01J1/02 G

According to International Patent Classification (IPC) or to both national classification and IPC

| B. | FIELDS SEARCHED |
|---|---|

Minimum documentation searched (classification system followed by classification symbols)

G01J1/00-G01J1/60; G01J11/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 1-262427 A (YAMATAKE HONEYWELL CO., LTD.) 19 October 1989 (1989-10-19) pages 2-5, fig. 1-6 | 1-2, 7-8, 19-20 |
| Y | | 3-6, 9-18 |
| Y | JP 2015-70640 A (MITSUBISHI ELECTRIC CORPORATION) 13 April 2015 (2015-04-13) paragraphs [0041], [0164] | 3, 9-18 |
| Y | JP 2019-211937 A (KAWASE, Nobuo) 12 December 2019 (2019-12-12) paragraphs [0011]-[0028], [0033]-[0092] | 4-6, 11-14 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **07 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/032107**

| Patent document cited in search report | | | Publication date (day/month/year) | Patent family member(s) | Publication date (day/month/year) |
|---|---|---|---|---|---|
| JP | 1-262427 | A | 19 October 1989 | (Family: none) | |
| JP | 2015-70640 | A | 13 April 2015 | (Family: none) | |
| JP | 2019-211937 | A | 12 December 2019 | (Family: none) | |

Form PCT/ISA/210 (patent family annex) (July 2022)

**REFERENCES CITED IN THE DESCRIPTION**

**Patent documents cited in the description**

- JP 7216732 B